# EUROPÄISCHE PATENTSCHRIFT

(11) **EP 2 057 015 B1**
(45) Veröffentlichungstag und Bekanntmachung des Hinweises auf die Patenterteilung: **18.06.2014**
(21) Anmeldenummer: 07788532.5
(22) Anmeldetag: 24.08.2007
(51) Int. Cl.: B32B 27/34, C08L 77/00

(54) **VERBUNDTEIL AUS EINER FOLIE UND EINEM SUBSTRAT AUF BASIS EINES AMORPHEN POLYAMIDS**
COMPOSITE PART CONSISTING OF A FILM AND A SUBSTRATE BASED ON AN AMORPHOUS POLYAMIDE
PIÈCE COMPOSITE CONSTITUÉE D'UNE FEUILLE ET D'UN SUBSTRAT À BASE D'UN POLYAMIDE AMORPHE

(30) Priorität: 01.09.2006 DE 102006041138
(43) Veröffentlichungstag der Anmeldung: 13.05.2009
(73) Patentinhaber: Evonik Degussa GmbH, 45128 Essen (DE)
(72) Erfinder: LÜTZELER, Kirsten, 48153 Münster (DE); HÜLSMANN, Klaus, 45721 Haltern am See (DE); WIELPÜTZ, Martin, 48308 Senden (DE); WURSCHE, Roland, 48249 Dülmen (DE)
(86) Internationale Anmeldenummer: PCT/EP2007/058796
(87) Internationale Veröffentlichungsnummer: WO 2008/025729

(56) Entgegenhaltungen:
- EP-A- 0 568 988
- WO-A-2006/087250
- DE-A1- 10 110 964
- DE-A1- 19 702 088
- DE-A1- 19 943 910
- US-A- 5 185 189
- US-A1- 2002 197 888

## Beschreibung

Gegenstand der Erfindung sind Verbundteile aus einer Folie und einem Substrat auf Basis eines weitgehend amorphen Polyamids.

Spritzgegossene oder extrudierte Formteile aus einem amorphen Polyamid finden wegen der Transparenz, der hohen Schlagzähigkeit und den sonstigen guten optischen und mechanischen Eigenschaften des amorphen Polyamids weite Verwendung. Aufgrund der mangelnden Chemikalienbeständigkeit sowie der Spannungsrissempfindlichkeit der amorphen Polyamide können jedoch Formteile hieraus überall dort nicht eingesetzt werden, wo die Einwirkung von Lösemitteln oder Chemikalien nicht sicher ausgeschlossen werden kann.

Der Erfindung liegt die Aufgabe zugrunde, die oben genannten Nachteile zu vermeiden und Gegenstände auf Basis einer Formmasse aus einem weitgehend amorphen Polyamid bereitzustellen, die spannungsrissunempfindlich, ausreichend kratzfest und abriebfest sind, wobei die Transparenz weitestgehend erhalten bleiben sollte.

Diese Aufgabe wurde gemäß Anspruch 8 gelöst durch ein Verbundteil, das zusammengesetzt ist aus
I. einer Folie, die eine Schicht I. a) aus einer Formmasse aus einem teilkristallinen Polyamid enthält, sowie
II. einem Substrat aus einer Formmasse aus einem weitgehend amorphen Polyamid.

Gegenstand der Erfindung ist auch gemäß Anspruch 1 die Verwendung der Folie gemäß I. zur Herstellung eines Verbundteils, das ein Substrat gemäß II. enthält.

Das teilkristalline Polyamid der Schicht gemäß I. a) unterliegt keiner Einschränkung. In erster Linie kommen hierbei aliphatische Homo- und Copolykondensate in Frage, beispielsweise PA46, PA66, PA88, PA610, PA612, PA810, PA1010, PA1012, PA1212, PA6, PA7, PA8, PA9, PA10, PA 11 und PA 12. (Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, dass von einer α,ω-Aminocarbonsäure bzw. von dem davon abgeleiteten Lactam ausgegangen worden ist; im übrigen sei verwiesen auf H. Domininghaus, Die Kunststoffe und ihre Eigenschaften, Seiten 272 ff., VDI-Verlag, 1976.)

Sofern Copolyamide verwendet werden, können diese z. B. Adipinsäure, Sebacinsäure, Korksäure, Isophthalsäure, Terephthalsäure, Naphthalin-2.6-dicarbonsäure usw. als Cosäure bzw. Bis(4-aminocyclohexyl)methan, Bis(3-methyl-4-aminocyclohexyl)methan, Trimethylhexamethylendiamin, Hexamethylendiamin oder ähnliches als Codiamin enthalten. Lactame wie Caprolactam oder Laurinlactam bzw. Aminocarbonsäuren wie ω-Aminoundecansäure können als Cokomponente ebenfalls eingebaut sein.

Die Herstellung dieser Polyamide ist bekannt (z. B. D. B. Jacobs, J. Zimmermann, Polymerization Processes, S. 424 - 467, Interscience Publishers, New York, 1977; DE-AS 21 52 194).

Darüber hinaus sind als Polyamide auch gemischte aliphatisch/aromatische Polykondensate geeignet, wie sie z. B. in den US-Patentschriften Nr. 4 163 101, 4 603 166, 4 831 108, 5 112 685, 5 436 294 und 5 447 980 sowie in der EP-A-0 309 095 beschrieben sind. Es handelt sich in der Regel um Polykondensate, deren Monomere aus aromatischen Dicarbonsäuren wie z. B. Terephthalsäure und Isophthalsäure, aliphatischen Dicarbonsäuren wie z. B. Adipinsäure, aliphatischen Diaminen wie z. B. Hexamethylendiamin, Nonamethylendiamin, Dodecamethylendiamin und 2-Methyl-1,5-pentandiamin sowie Lactamen bzw. ω-Aminocarbonsäuren wie z. B. Caprolactam, Laurinlactam und ω-Aminoundecansäure ausgewählt sind. Der Gehalt an aromatischen Monomereinheiten im Polykondensat beträgt in der Regel mindestens 0,1 %, mindestens 5 %, mindestens 10 %, mindestens 15 %, mindestens 20 %, mindestens 25 %, mindestens 30 %, mindestens 35 %, mindestens 40 %, mindestens 45 % oder etwa 50 %, bezogen auf die Summe aller Monomereinheiten. Derartige Polykondensate werden häufig als "Polyphthalamide" bzw. "PPA" bezeichnet. Weitere geeignete Polyamide sind Poly(etheresteramide) bzw. Poly(etheramide); derartige Produkte werden z. B. in den DE-OSS 25 23 991, 27 12 987 und 30 06 961 beschrieben.

Das teilkristalline Polyamid besitzt eine Schmelzenthalpie von mindestens 8 J/g, bevorzugt von mindestens 10 J/g, besonders bevorzugt von mindestens 12 J/g und insbesondere bevorzugt von mindestens 16 J/g, gemessen mit der DSC-Methode gemäß ISO 11357 beim 2. Aufheizen und Integration des Schmelzpeaks.

Die Polyamidformmasse kann entweder eines dieser Polyamide oder mehrere als Gemisch enthalten. Weiterhin können bis zu 40 Gew.-% andere Thermoplaste enthalten sein, sofern diese die Verbundfähigkeit nicht stören, insbesondere schlagzähmachende Kautschuke wie Ethylen/Propylen- oder Ethylen/Propylen/Dien-Copolymere, Polypentenylen, Polyoctenylen, statistische bzw. blockartig aufgebaute Copolymere aus alkenylaromatischen Verbindungen mit aliphatischen Olefinen oder Dienen (EP-A-0 261 748) oder Kern/Schale-Kautschuke mit einem zähelastischen Kern aus (Meth)Acrylat-, Butadien- oder Styrol/Butadien-Kautschuk mit Glastemperaturen T_{g}< -10 °C, wobei der Kern vernetzt sein kann und die Schale aus Styrol und/oder Methylmethacrylat und/oder weiteren ungesättigten Monomeren aufgebaut sein kann (DE-OSS 21 44 528, 37 28 685).

Der Polyamidformmasse können die für Polyamide üblichen Hilfs- und Zusatzstoffe wie z. B. Flammschutzmittel, Stabilisatoren, UV-Absorber, Weichmacher, Verarbeitungshilfsmittel, Füllstoffe, insbesondere zur Verbesserung der elektrischen Leitfähigkeit, Nanofüllstoffe, Pigmente, Farbstoffe, Nukleierungsmittel oder ähnliches zugefügt werden. Die Menge der genannten Mittel ist so zu dosieren, dass die gewünschten Eigenschaften nicht ernsthaft beeinträchtigt werden. Für die meisten Anwendungen ist erwünscht, dass die Polyamidformmasse bei der verwendeten Schichtdicke ausreichend transparent ist:

In einer bevorzugten Ausführungsform besitzen die Monomereinheiten des Polyamids, die sich von Diamin, Dicarbonsäure bzw. Lactam (oder Aminocarbonsäure) herleiten, im Durchschnitt mindestens 8 C-Atome und besonders bevorzugt mindestens 9 C-Atome.

Im Rahmen der Erfindung besonders geeignete Polyamide sind:
- Das Polyamid aus 1,12-Dodecandisäure und 4,4'-Diaminodicyclohexylmethan (PA PACM12), insbesondere ausgehend von einem 4,4'-Diaminodicyclohexylmethan mit einem trans,trans-Isomerenanteil von 35 bis 65 %;
- PA612, PA1010, PA1012, PA11, PA12, PA1212 sowie Mischungen hieraus;
- Copolyamide, die aus folgender Monomerkombination herstellbar sind:
   a) 65 bis 99 Mol-%, bevorzugt 75 bis 98 Mol-%, besonders bevorzugt 80 bis 97 Mol-% und insbesondere bevorzugt 85 bis 96 Mol-% eines im wesentlichen äquimolaren Gemisches aus einem aliphatischen unverzweigten Diamin und einer aliphatischen unverzweigten Dicarbonsäure, wobei das Gemisch gegebenenfalls als Salz vorliegt und darüber hinaus Diamin und Dicarbonsäure bei der Berechnung der Zusammensetzung jeweils einzeln gezählt werden, mit der Einschränkung, dass das Gemisch aus Diamin und Dicarbonsäure im Mittel 8 bis 12 C-Atome und bevorzugt 9 bis 11 C-Atome pro Monomer enthält;
   b) 1 bis 35 Mol-%, bevorzugt 2 bis 25 Mol-%, besonders bevorzugt 3 bis 20 Mol-% und insbesondere bevorzugt 4 bis 15 Mol-% eines im wesentlichen äquimolaren Gemisches aus einem cycloaliphatischen Diamin und einer Dicarbonsäure.

Das Substrat besteht aus einer Formmasse, die als Hauptbestandteil ein weitgehend amorphes Polyamid enthält. Das weitgehend amorphe Polyamid besitzt eine Schmelzenthalpie von weniger als 8 J/g, bevorzugt von weniger als 6 J/g, besonders bevorzugt von weniger als 4 J/g und insbesondere bevorzugt von weniger als 3 J/g, gemessen mit der DSC-Methode gemäß ISO 11357 beim 2. Aufheizen und Integration des eventuell vorhandenen Schmelzpeaks.

Beispiele für erfindungsgemäß verwendbare weitgehend amorphe Polyamide sind:
- das Polyamid aus Terephthalsäure und/oder Isophthalsäure und dem Isomerengemisch aus 2.2.4- und 2.4.4-Trimethylhexamethylendiamin,
- das Polyamid aus Isophthalsäure und 1.6-Hexamethylendiamin,
- das Copolyamid aus einem Gemisch aus Terephthalsäure/Isophthalsäure und 1.6-Hexamethylendiamin, gegebenenfalls in Mischung mit 4.4'-Diaminodicyclohexylmethan,
- das Copolyamid aus Terephthalsäure und/oder Isophthalsäure, 3.3'-Dimethyl-4.4'-diaminodicyclohexylmethan und Laurinlactam oder Caprolactam,
- das (Co)Polyamid aus 1.12-Dodecandisäure oder Sebacinsäure, 3.3'-Dimethyl-4.4'-diaminodicyclohexylmethan und gegebenenfalls Laurinlactam oder Caprolactam,
- das Copolyamid aus Isophthalsäure, 4.4'-Diaminodicyclohexylmethan und Laurinlactam oder Caprolactam,
- das Polyamid aus 1.12-Dodecandisäure und 4.4'-Diaminodicyclohexylmethan (bei niedrigem trans,trans-Isomerenanteil),
- das Copolyamid aus Terephthalsäure und/oder Isophthalsäure sowie einem alkylsubstituierten Bis(4-aminocyclohexyl)methan-Homologen, gegebenenfalls in Mischung mit Hexamethylendiamin,
- das Copolyamid aus Bis(4-amino-3-methyl-5-ethyl-cyclohexyl)methan, gegebenenfalls zusammen mit einem weiteren Diamin, sowie Isophthalsäure, gegebenenfalls zusammen mit einer weiteren Dicarbonsäure,
- das Copolyamid aus einer Mischung von m-Xylylendiamin und einem weiteren Diamin, z. B. Hexamethylendiamin, sowie Isophthalsäure, gegebenenfalls zusammen mit einer weiteren Dicarbonsäure wie z. B. Terephthalsäure und/oder 2,6-Naphthalindicarbonsäure,
- das Copolyamid aus einer Mischung von Bis(4-amino-cyclohexyl)methan und Bis-(4-amino-3-methyl-cyclohexyl)methan sowie aliphatischen Dicarbonsäuren mit 8 bis 14 C-Atomen, sowie
- Polyamide oder Copolyamide aus einer Mischung, die 1.14-Tetradecandisäure sowie ein aromatisches, arylaliphatisches oder cycloaliphatisches Diamin enthält.

Diese Beispiele können durch Hinzunahme weiterer Komponenten (z. B. Caprolactam, Laurinlactam oder Diamin/Dicarbonsäure-Kombinationen) oder durch teilweisen oder vollständigen Ersatz von Ausgangskomponenten durch andere Komponenten weitestgehend variiert werden.

Die genannten sowie weitere geeignete weitgehend amorphe Polyamide sowie geeignete Herstellungsmethoden sind unter anderem in folgenden Patentanmeldungen beschrieben: WO 02090421, EP-A-0 603 813, DE-A 37 17 928, DE-A 100 09 756, DE-A 101 22 188, DE-A 196 42 885, DE-A 197 25 617, DE-A 198 21 719, DE-C 198 41 234, EP-A-1 130 059, EP-A 1 369 447, EP-A 1 595 907, CH-B-480 381, CH-B-679 861, DE-A-22 25 938, DE-A-26 42 244, DE-A-27 43 515, DE-A- 29 36 759, DE-A- 27 32 928, DE-A- 43 10 970, EP-A-0 053 876, EP-A- 0 271 308, EP-A-0 313 436, EP-A-0 725 100 und EP-A-0 725 101.

Die Formmasse des Substrats kann die für transparente Polyamide üblichen Hilfs- und Zusatzstoffe enthalten, wie Flammschutzmittel, Stabilisatoren, Weichmacher, Glasfasern, Füllstoffe, Antistatika, Farbstoffe, Pigmente, Entformungsmittel, Fließmittel, andere Polymere, die bevorzugt die Transparenz nicht beeinträchtigen oder Schlagzähmodifikatoren. Die Menge aller Hilfs- und Zusatzstoffe beträgt insgesamt maximal 50 Gew.-%, bevorzugt maximal 40 Gew.-%, besonders bevorzugt maximal 30 Gew.-% und insbesondere bevorzugt maximal 20 Gew.-%.

In vielen Fällen haftet die Folienschicht aus der Formmasse aus dem teilkristallinen Polyamid direkt auf dem Substrat. Geeignete Polyamidkombinationen sind dem Fachmann bekannt oder können durch einfaches Ausprobieren ermittelt werden. In den Fällen, in denen keine ausreichende Haftung erzielt werden kann, kann eine Mehrschichtfolie verwendet werden, die eine substratseitige Haftvermittlerschicht enthält. Die Art des Haftvermittlers ist unkritisch; er sollte jedoch vorzugsweise bei der gewählten Schichtdicke ausreichend transparent sein.

In einer Ausführungsform enthält der Haftvermittler ein Blend aus einem Polyamid, das mit dem teilkristallinen Polyamid der Folienschicht identisch ist oder ihm ähnlich ist, sowie einem Polyamid, das mit dem amorphen Polyamid des Substrats identisch ist oder ihm ähnlich ist. "Ähnlich" bedeutet, dass die betreffenden Polyamide in der Schmelze zu phasenstabilen Blends gemischt werden können bzw. dass Schichten aus beiden Polyamiden nach dem Coextrudieren oder Hinterspritzen eine ausreichende Haftung aufeinander aufweisen, das heißt dass die Polyamide miteinander verträglich sind. Verträgliche Polyamidkombinationen sind dem Fachmann bekannt oder können durch einfaches Ausprobieren ermittelt werden. Das Blend wird üblicherweise durch Schmelzemischen hergestellt, vorzugsweise unter Bedingungen, bei denen Blockcopolymere durch Endgruppenreaktionen oder Transamidierung entstehen. Derartige Bedingungen, etwa erhöhte Schmelzetemperatur und/oder Zugabe eines Katalysators, sind dem Fachmann bekannt. Geeignete Mischungsverhältnisse in Gewichtsprozent sind 20 - 80 zu 80 - 20, vorzugsweise 30 - 70 zu 70 - 30 und besonders bevorzugt 40 - 60 zu 60 - 40.

In einer weiteren Ausführungsform enthält der Haftvermittler 2 bis 100 Gew.-%, bevorzugt 5 bis 90 Gew.-%, besonders bevorzugt 10 bis 80 Gew.-%, insbesondere bevorzugt 15 bis 60 Gew.-% und ganz besonders bevorzugt 20 bis 40 Gew.-% eines Copolymeren, welches folgende Monomereinheiten enthält:
- 70 bis 99,9 Gew.-% an Monomereinheiten, die sich von vinylischen Verbindungen herleiten, die ausgewählt sind aus Acrylsäurederivaten, Methacrylsäurederivaten, α-Olefinen und Vinylaromaten
   sowie
- 0,1 bis 30 Gew.-% an Monomereinheiten, die eine funktionelle Gruppe enthalten, die ausgewählt ist aus einer Carbonsäureanhydridgruppe, einer Epoxidgruppe und einer Oxazolingruppe.

Das Copolymere enthält bevorzugt folgende Monomereinheiten:
1. Etwa 70 bis etwa 99,9 Gew.-%, bevorzugt 80 bis 99,4 Gew.-% und besonders bevorzugt 85 bis 99 Gew.-% an Monomereinheiten, die ausgewählt sind aus Einheiten folgender Formeln: 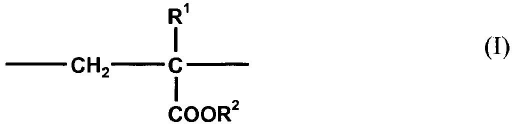 mit R¹ = H oder CH₃ und R² = H, Methyl, Ethyl, Propyl oder Butyl; 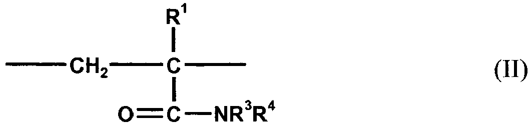 mit R¹ wie oben und R³ und R⁴, unabhängig voneinander, gleich H, Methyl oder Ethyl; 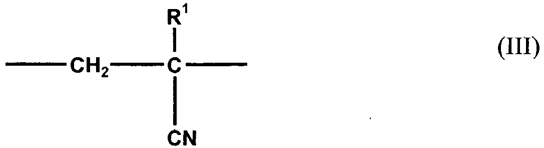 mit R¹ wie oben; 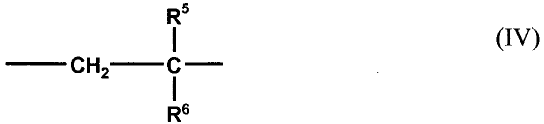 mit R⁵ = H oder CH₃ und R⁶ = H oder C₆H₅; 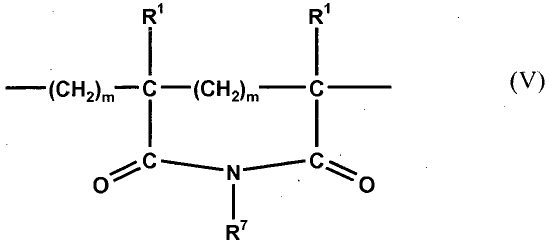 mit R¹ wie oben und R⁷ = H, Methyl, Ethyl, Propyl, Butyl oder Phenyl und m = 0 oder 1;
2. etwa 0,1 bis etwa 30 Gew.-%, bevorzugt 0,6 bis 20 Gew.-% und besonders bevorzugt 1 bis 15 Gew.-% an Monomereinheiten, die ausgewählt sind aus Einheiten folgender Formeln: 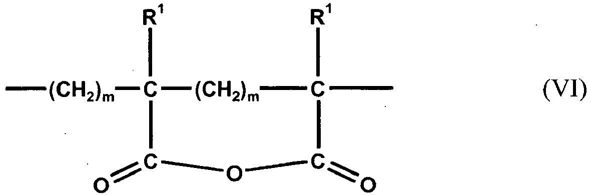 mit R¹ und m wie oben; 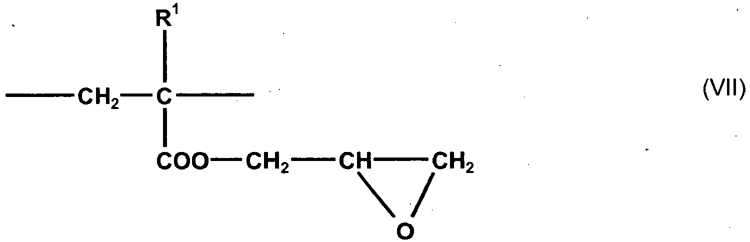 mit R¹ wie oben; 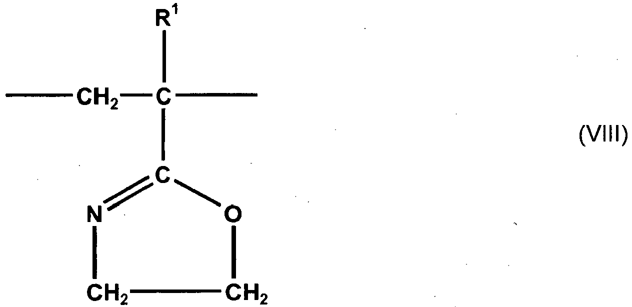 mit R¹ wie oben.

Die Limitierung der Kettenlänge bei den Substituenten R¹ bis R⁵ sowie R⁷ ist darin begründet, dass längere Alkylreste zu einer erniedrigten Glasübergangstemperatur und damit zu einer verringerten Wärmeformbeständigkeit führen. Dies mag im Einzelfall in Kauf genommen werden.

Die Einheiten der Formel (I) leiten sich beispielsweise von Acrylsäure, Methacrylsäure, Methylacrylat, Ethylacrylat, n-Butylacrylat, Methylmethacrylat, n-Propylmethacrylat oder i-Butylmethacrylat her.

Die Einheiten der Formel (II) leiten sich beispielsweise von Acrylamid, Methacrylamid, N-Methylacrylamid, N-Methylmethacrylamid oder N,N-Dimethylacrylamid her.

Die Einheiten der Formel (III) leiten sich von Acrylnitril oder Methacrylnitril her.

Die Einheiten der Formel (IV) leiten sich von Ethen, Propen, Styrol oder α-Methylstyrol her; letztere können ganz oder teilweise durch andere polymerisierbare Aromaten wie p-Methylstyrol oder Inden ersetzt werden, die gleichwirkend sind.

Die Einheiten der Formel (V) leiten sich im Falle m = 0 von gegebenenfalls substituierten Maleinimiden her wie Maleinimid, N-Methylmaleinimid, N-Ethylmaleinimid, N-Phenylmaleinimid oder N-Methylaconitsäureimid. Im Falle m = 1 leiten sie sich durch Umsetzung zweier in einem Polymeren benachbarter Einheiten der Formel (I) mit Ammoniak oder einem primären Amin unter Imidbildung her.

Die Einheiten der Formel (VI) leiten sich im Falle m = 0 von gegebenenfalls substituierten Maleinsäureanhydriden her wie Maleinsäureanhydrid oder Aconitsäureanhydrid. Letztere können ganz oder teilweise durch andere ungesättigte Säureanhydride wie z. B. Itaconsäureanhydrid ersetzt werden, die gleichwirkend sind. Im Falle m = 1 leiten sie sich durch Wasserabspaltung aus zwei in einem Polymeren benachbarten Einheiten der Formel (I) (R² = H) unter Ringschluss her.

Die Einheiten der Formel (VII) leiten sich von Glycidylacrylat oder Glycidylmethacrylat her und die Einheiten der Formel (VIII) von Vinyloxazolin oder Isopropenyloxazolin.

Vom Copolymeren sind verschiedene Ausgestaltungen bevorzugt, die folgende Einheiten enthalten:
A. 14 bis 96 Gew.-%, bevorzugt 20 bis 85 Gew.-% und besonders bevorzugt 25 bis 75 Gew.-% Einheiten der Formel (I), wobei R² nicht H ist;
   0 bis 75 Gew.-%, bevorzugt 1 bis 60 Gew.-% und besonders bevorzugt 5 bis 40 Gew.-% Einheiten der Formel (V) mit m = 1;
   0 bis 15 Gew.-%, bevorzugt 0 bis 10 Gew.-% und besonders bevorzugt 0,1 bis 7 Gew.-% Einheiten der Formel (I) mit R² = H;
   0,1 bis 30 Gew.-%, bevorzugt 1 bis 20 Gew.-% und besonders bevorzugt 2 bis 15 Gew.-% Einheiten der Formel (VI) mit m = 1.
   Bei Anwesenheit von Einheiten der Formel (V) werden derartige Copolymere als Polyacrylimide bzw. Polymethacrylimide oder manchmal auch als Polyglutarimide bezeichnet. Es handelt sich hierbei um Produkte ausgehend von Polyalkylacrylaten bzw. Polyalkylmethacrylaten, bei denen zwei benachbarte Carboxylatgruppen zu einem cyclischen Säureimid umgesetzt worden sind. Die Imidbildung wird vorzugsweise mit Ammoniak bzw. primären Aminen, wie z. B. Methylamin, in Gegenwart von Wasser durchgeführt, wobei die Einheiten der Formel (VI) und ggf. Einheiten der Formel (I) mit R² = H durch Hydrolyse mit entstehen. Die Produkte sowie ihre Herstellung sind bekannt (Hans R. Kricheldorf, Handbook of Polymer Synthesis, Part A, Verlag Marcel Dekker Inc. New York-Basel-Hongkong, S. 223 f., H. G. Elias, Makromoleküle, Hüthig und Wepf Verlag Basel-Heidelberg-New York; US 2 146 209 A; US 4 246 374). Setzt man nur mit Wasser um, so erhält man Einheiten der Formel (VI) sowie ggf. saure Einheiten (I) durch Hydrolyse, ohne dass Imideinheiten (V) gebildet werden.
B. 10 bis 60 Gew.-%, bevorzugt 15 bis 50 Gew.-% und besonders bevorzugt 20 bis 40 Gew.-% Einheiten der Formel (IV);
   39,9 bis 80 Gew.-%, bevorzugt 44,9 bis 75 Gew.-% und besonders bevorzugt 49,9 bis 70 Gew.-% Einheiten der Formel (III);
   0,1 bis 30 Gew.-%, bevorzugt 0,6 bis 20 Gew.-% und besonders bevorzugt 1 bis 15 Gew.-% an Einheiten der Formel (VI) mit m = 0.
   Derartige Copolymere sind auf bekannte Weise durch radikalisch initiierte Copolymerisation von z. B. aliphatisch ungesättigten Aromaten, ungesättigten Carbonsäureanhydriden und gegebenenfalls Acryl- bzw. Methacrylnitril zugänglich.
C. 39,9 bis 99,9 Gew.-%, bevorzugt 49,9 bis 99,4 Gew.-% und besonders bevorzugt 59,9 bis 99 Gew.-% Einheiten der Formel (I);
   0 bis 60 Gew.-%, bevorzugt 0,1 bis 50 Gew.-% und besonders bevorzugt 2 bis 40 Gew.-% Einheiten der Formel (IV);
   0,1 bis 30 Gew.-%, bevorzugt 0,6 bis 20 Gew.-% und besonders bevorzugt 1 bis 15 Gew.-% an Einheiten der Formel (VI) mit m = 0.
   Derartige Copolymere sind auf bekannte Weise durch radikalisch initiierte Copolymerisation von Acrylsäure, Methacrylsäure und/oder deren Estern, gegebenenfalls aliphatisch ungesättigten Aromaten oder Olefinen sowie ungesättigten Carbonsäureanhydriden zugänglich.
D. 25 bis 99,8 Gew.-%, bevorzugt 40 bis 98,4 Gew.-% und besonders bevorzugt 50 bis 97 Gew.-% Einheiten der Formel (I);
   0,1 bis 45 Gew.-%, bevorzugt 1 bis 40 Gew.-% und besonders bevorzugt 2 bis 35 Gew.-% Einheiten der Formel (III);
   0,1 bis 30 Gew.-%, bevorzugt 0,6 bis 20 Gew.-% und besonders bevorzugt 1 bis 15 Gew.-% Einheiten der Formel (VI) mit m = 0.
   Derartige Copolymere sind auf bekannte Weise durch radikalisch initiierte Copolymerisation von Acrylsäure, Methacrylsäure und/oder deren Estern, Acryl- bzw. Methacrylnitril und ungesättigten Carbonsäureanhydriden zugänglich.
E. ABS-Polymer, das 0,1 bis 30 Gew.-%, bevorzugt 0,6 bis 20 Gew.-% und besonders bevorzugt 1 bis 15 Gew.-% Einheiten der Formel (VI) mit m = 0 enthält. Diese können in die Ketten einpolymerisiert oder auf die Ketten aufgepfropft sein.
F. 0 bis 99,9 Gew.-%, bevorzugt 0,1 bis 99,4 Gew.-% und besonders bevorzugt 2 bis 99 Gew.-% Einheiten ausgewählt aus den Formeln (I), wobei R² nicht H ist, und (III),
   0 bis 60 Gew.-%, bevorzugt 0,1 bis 50 Gew.-% und besonders bevorzugt 2 bis 40 Gew.-% Einheiten der Formel (IV),
   0,1 bis 30 Gew.-%, bevorzugt 0,6 bis 20 Gew.-% und besonders bevorzugt 1 bis 15 Gew.-% Einheiten der Formel (VII).
G. 0 bis 99,9 Gew.-%, bevorzugt 0,1 bis 99,4 Gew.-% und besonders bevorzugt 2 bis 99 Gew.-% Einheiten ausgewählt aus den Formeln (I), wobei R² nicht H ist, und (III),
   0 bis 60 Gew.-%, bevorzugt 0,1 bis 50 Gew.-% und besonders bevorzugt 2 bis 40 Gew.-% Einheiten der Formel (IV),
   0,1 bis 30 Gew.-%, bevorzugt 0,6 bis 20 Gew.-% und besonders bevorzugt 1 bis 15 Gew.-% Einheiten der Formel (VIII).

Das Copolymere kann in jedem Fall zusätzlich weitere Monomereinheiten enthalten, beispielsweise solche, die sich von Maleinsäurediestern, Fumarsäurediestern, Itaconsäureestern oder Vinylacetat herleiten, solange die gewünschte haftvermittelnde Wirkung dadurch nicht wesentlich beeinträchtigt wird.

Der Haftvermittler kann in einer Ausführungsform ganz aus dem Copolymer bestehen; in einer Variante hiervon enthält das Copolymer einen Schlagzähmodifier, z. B. einen Acrylatkautschuk.

In einer weiteren Ausführungsform enthält der Haftvermittler 2 bis 99,9 Gew.-%, bevorzugt 5 bis 90 Gew.-%, besonders bevorzugt 10 bis 80 Gew.-%, insbesondere bevorzugt 15 bis 60 Gew.-% und ganz besonders bevorzugt 20 bis 40 Gew.-% des Copolymeren sowie 0,1 bis 98 Gew.-%, bevorzugt 10 bis 95 Gew.-%, besonders bevorzugt 20 bis 90 Gew.-%, insbesondere bevorzugt 40 bis 85 Gew.-% und ganz besonders bevorzugt 60 bis 80 Gew.-% eines beliebigen Polyamids. Die Haftung an den beiden Grenzflächen wird in diesem Fall in erster Linie durch das Copolymere bewirkt. Selbstverständlich kann die Haftung noch dadurch unterstützt werden, wenn das Polyamid ausgewählt wird aus dem teilkristallinen Polyamid der Folie, dem amorphen Polyamid des Substrats, einem Polyamid, das dem Polyamid der Folie und/oder dem Polyamid des Substrats ähnlich ist oder Mischungen hieraus.

Der Haftvermittler kann die üblichen Hilfs- und Zusatzstoffe wie z. B. Flammschutzmittel, Stabilisatoren, Weichmacher, Verarbeitungshilfsmittel, Farbstoffe, Pigmente oder ähnliches enthalten. Die Menge der genannten Mittel ist so zu dosieren, dass die gewünschten Eigenschaften nicht ernsthaft beeinträchtigt werden.

Neben der erfindungsgemäß enthaltenen Schicht aus einer Polyamidformmasse und gegebenenfalls einer Haftvermittlerschicht kann die Folie, je nach Anwendung, weitere Schichten enthalten, beispielsweise eine substratseitige Stützschicht aus einer Polyamid-Formmasse, die bevorzugt mit dem Substrat von der Polymerzusammensetzung her weitgehend übereinstimmt, eine Farbschicht, eine weitere Polyamidschicht, etwa als Trägerschicht, und/oder eine Schutzschicht bzw. einen Clearcoat.

Die Farbschicht kann eine Lackschicht sein; sie besteht aber, dem Stand der Technik entsprechend, bevorzugt aus einer eingefärbten Thermoplastschicht. Die Thermoplastschicht kann mit der Schicht gemäß I. a) identisch sein. In einer weiteren Ausführungsform kann die Farbschicht sich an die Schicht gemäß I. a) nach außen oder nach innen anschließen. Die Folie wird gegebenenfalls nach außen hin von einem Clearcoat abgedeckt, falls dies anwendungstechnisch erforderlich ist, um z. B. eine gewünschte Tiefenwirkung der Einfärbung sicherzustellen. Als Farbmittel können z. B. organische Farbstoffe, anorganische bzw. organische Pigmente oder Metallflitter eingesetzt werden.

Der Clearcoat kann dem Stand der Technik entsprechend beispielsweise aus Polyamid, einem Acrylatpolymer, einem Fluorpolymer oder Mischungen daraus bestehen. Er soll die geforderten visuellen Oberflächeneigenschaften sicherstellen und die darunter liegenden Schichten schützen. Er kann beispielsweise auch ein Klarlack auf Polyurethanbasis sein. Eine Schutzschicht in Form eines Lackes kann zur Erhöhung der Kratzfestigkeit gemäß dem Stand der Technik auch modifiziert sein. Daneben ist es auch möglich, auf dem Bauteil eine Schutzschicht über Verfahren der Vakuumabscheidung zu generieren.

Wenn der Clearcoat ein Polyamid ist, kommen hierfür insbesondere die oben für die Folie als besonders geeignet angeführten Polyamide in Frage.

Der Clearcoat kann gegebenenfalls transparent eingefärbt sein, er ist vorzugsweise aber nicht eingefärbt.

Eine Trägerschicht ist eine Schicht, die der Folie durch ihre Dicke eine größere Festigkeit verleiht.

Zusätzlich kann auf die fertige Mehrschichtfolie eine abziehbare Schutzfolie auflaminiert werden, die als Transport- oder Montageschutz wirkt und nach der Herstellung des Verbundteils abgezogen wird.

In einer bevorzugten Ausführungsform enthält die Schicht gemäß I. a), die Farbschicht und/oder die Trägerschicht eine Formmasse, die ein Polyetheramid oder ein Polyetheresteramid enthält und vorzugsweise ein Polyetheramid oder Polyetheresteramid auf Basis eines linearen aliphatischen Diamins mit 6 bis 18 und bevorzugt 6 bis 12 C-Atomen, einer linearen aliphatischen oder einer aromatischen Dicarbonsäure mit 6 bis 18 und bevorzugt 6 bis 12 C-Atomen und eines Polyethers mit mehr als durchschnittlich 2,3 C-Atomen pro Sauerstoffatom und einer zahlenmittleren Molmasse von 200 bis 2 000. Die Formmasse dieser Schicht kann weitere Blendkomponenten enthalten wie z. B. Polyacrylate oder Polyglutarimide mit Carboxyl- bzw. Carbonsäureanhydridgruppen oder Epoxidgruppen, einen funktionelle Gruppen enthaltenden Kautschuk und/oder ein Polyamid. Derartige Formmassen sind Stand der Technik; sie sind beispielsweise in der EP 1 329 481 A2 und der DE-OS 103 33 005 beschrieben, auf die hier ausdrücklich Bezug genommen wird. Um gegenüber einer eventuell nach außen oder auch nach innen folgenden Polyamidschicht eine gute Schichtenhaftung zu gewährleisten, ist es vorteilhaft, wenn hier der Polyamidanteil des Polyamidelastomeren aus den gleichen Monomeren aufgebaut ist, wie sie in einer der Komponenten der Polyamidschicht verwendet werden. Dies ist aber nicht zwingend erforderlich, um eine gute Haftung zu erreichen. Alternativ zum Polyamidelastomeren kann die Schicht gemäß I. a), die Farbschicht und/oder die Trägerschicht neben einem Polyamid auch einen üblichen schlagzähmachenden Kautschuk enthalten. Vorteilhaft an diesen Ausführungsformen ist, dass in vielen Fällen ein Thermoformen der Folie als separater Schritt vor dem Hinterspritzen nicht notwendig ist, da die Folie durch das Hinterspritzen gleichzeitig auch umgeformt wird.

Beispiele für sinnvolle Schichtenanordnungen der erfindungsgemäß verwendeten Folie sind, jeweils von außen nach innen (zum Substrat hin):
a) Schicht gemäß I. a/Haftvermittlerschicht
b) Schicht gemäß I. a/Haftvermittlerschicht/Schicht aus amorphem Polyamid
c) Clearcoat/Schicht gemäß I. a) als Farbschicht/ Haftvermittlerschicht
d) Clearcoat/Farbschicht/Schicht gemäß I. a)/ Haftvermittlerschicht
e) Clearcoat/Trägerschicht/ Schicht gemäß I. a)/ Haftvermittlerschicht
f) Clearcoat/Farbschicht/Trägerschicht/Schicht gemäß I. a)/Haftvermittlerschicht
g) Clearcoat/Farbschicht/Trägerschicht/Schicht gemäß I. a)/Haftvermittlerschicht/Schicht aus amorphem Polyamid

Die Folie hat eine Dicke von 0,02 bis 1,2 mm, bevorzugt von 0,05 bis 1 mm, besonders bevorzugt von 0,1 bis 0,8 mm und insbesondere bevorzugt von 0,2 bis 0,6 mm. Die Haftvermittlerschicht hat hierbei in einer bevorzugten Ausführungsform eine Dicke von 0,01 bis 0,5 mm, besonders bevorzugt von 0,02 bis 0,4 mm, ganz besonders bevorzugt von 0,04 bis 0,3 mm und insbesondere bevorzugt von 0,05 bis 0,2 mm. Die Folie wird mittels bekannter Methoden hergestellt, beispielsweise durch Extrusion, oder im Falle von mehrschichtigen Systemen durch Coextrusion oder Laminieren. Sie kann anschließend gegebenenfalls umgeformt werden.

Die stoffschlüssige Verbindung der Folie mit dem Substrat wird durch Verkleben, Verpressen, Laminieren, Hinterspritzen, Hinterschäumen oder Hinterpressen hergestellt. Vor der Bildung des Verbundes zwischen Folie und Substrat kann die Folie noch bearbeitet oder umgeformt werden, beispielsweise durch Thermoformen oder andere Verfahren. Die Oberfläche kann beispielsweise durch Prägen strukturiert werden. Eine Strukturierung der Oberfläche ist auch vorgelagert im Rahmen der Folienextrusion möglich, beispielsweise durch speziell gestaltete Walzen. Das erhaltene Verbundteil kann anschließend noch umgeformt werden.

In einer bevorzugten Ausführungsform wird die anspruchsgemäße Folie als Deckschicht eines optischen Bauteils verwendet. Beispiele hierfür sind Streuscheiben, Scheinwerferscheiben, Scheiben von Heckleuchten, Linsen, Prismen, Brillengläser, Displays, Dekorationsbauteile für Displays, Verscheibungen jeglicher Art sowie Handygehäuse.

In einer weiteren bevorzugten Ausführungsform wird die anspruchsgemäße Folie als Deckschicht eines Folienverbundes zur Gestaltung bzw. Dekoration von Oberflächen an und in Automobilen und Nutzfahrzeugen verwendet, wobei die Folie haftend mit dem Substrat verbunden ist. Das entsprechend gestaltete Bauteil kann flächig ausgeformt sein, wie etwa ein Karosserieteil, beispielsweise Dachmodul, Kotflügel, Motorhaube oder Tür. Daneben kommen auch Ausführungsformen in Frage, in denen längliche, mehr oder weniger gewölbte Bauteile erzeugt werden, etwa Verkleidungen, beispielsweise die Verkleidung sogenannter A-Säulen am Automobil oder Zier- und Blendleisten aller Art, etwa Radioblenden. Ein weiteres Beispiel sind Schutzverkleidungen für Türschwellen. Neben Anwendungen im Außenbereich des Kraftfahrzeuges können auch Bestandteile des Interieurs vorteilhaft durch die erfindungsgemäßen Folien dekoriert werden, insbesondere Zierelemente wie Leisten und Blenden, da auch im Innenraum Schlagzähigkeit und Beständigkeit gegenüber Chemikalien, beispielsweise Reinigungsmitteln, erforderlich ist.

Die Folie kann darüber hinaus beispielsweise als Schutzfolie gegen Verschmutzung, UV-Strahlung, Witterungseinflüsse, Chemikalien oder Abrieb verwendet werden, als Sperrfolie an Fahrzeugen, im Haushalt, an Böden, Tunnels, Zelten und Gebäuden oder als Dekorträger etwa für Oberbeläge von Sportgeräten, Booten, Flugzeugen, im Haushalt oder an Gebäuden. Beispiele hierfür sind auch Medizin-, Sanitär- bzw. Hygieneartikel wie z. B. Rasierer, elektrische Zahnbürsten sowie medizinische Geräte bzw. Bauteile.

Die folgenden Beispiele sollen die Erfindung illustrieren. In den Beispielen wurden folgende Materialien eingesetzt:

| | |
|---|---|
| PA PACM 12: | TROGAMID^{®} CX7323 (Degussa GmbH) |
| PA12: | Ein Typ mit einer relativen Lösungsviskosität ηᵣₑₗ, bestimmt gemäß ISO 307, von 2,1 |
| PA1012: | Ein Typ mit einer relativen Lösungsviskosität ηᵣₑₗ von 2,1 |
| PA1010: | Ein Typ mit einer relativen Lösungsviskosität ηᵣₑₗ von 2,0 |
| Haftvermittler (HV): | Ein Copolymer der Zusammensetzung |

a) 57 Gew.-% Monomereinheiten der Formel 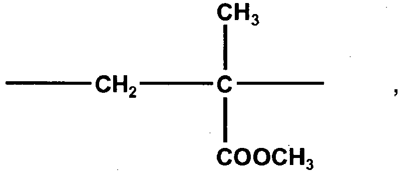
b) 30 Gew.-% Monomereinheiten der Formel 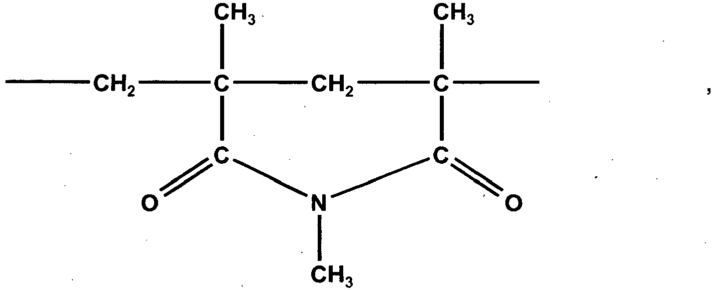
c) 3 Gew.-% Monomereinheiten der Formel 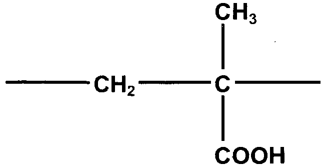 und
d) 10 Gew.-% Monomereinheiten der Formel 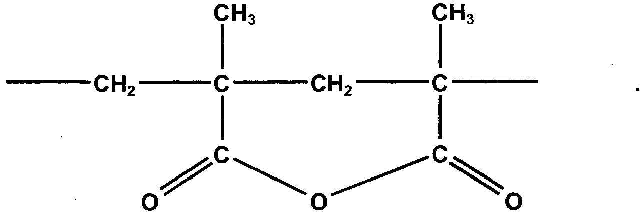
   Das Copolymer, ein Polymethacrylimid, ist herstellbar durch Umsetzung einer Schmelze von Polymethylmethacrylat (PMMA) mit einer wässrigen Methylaminlösung, beispielsweise in einem Extruder.

### Amorphes Polyamid: TROGAMID^{®} T5000, Polyamid aus Terephthalsäure und 2,2,4-/2,4,4-Trimethylhexamethylendiamin

Die Herstellung der Mehrschichtfolien erfolgte auf einer Anlage der Firma Collin mit einer Abzugsgeschwindigkeit von 2,0 m/min. Die extrudierten Einzelschichten wurden vereinigt und über einen Kalander gefahren. Die Folien hatten eine Breite von 24 cm; die Polyamidschicht hatte eine Dicke von ca. 180 µm und die Haftvermittlerschicht eine Dicke von ca. 240 µm.

Das Hinterspritzen geschah auf einer Maschine des Typs Engel 650/200 mit einer Werkzeugtemperatur von 90 °C sowie einer Massetemperatur von 300 °C. Die Folie wurde dabei auf ein Format von 100 mm x 150 mm zugeschnitten und in ein Werkzeug (Platte 105 mm x 150 mm x 0,8-10 mm) eingelegt. Die Dicke der hinterspritzten Platte betrug einschließlich Folie 3 mm.

Für Vergleichsmessungen wurden entsprechend analoge Platten aus amorphem Polyamid, aber ohne Folie, hergestellt.

Auf der Folienseite der Verbundplatten sowie an den Vergleichsplatten aus amorphem Polyamid wurden folgende Kennwerte gemessen:
- Abrieb nach dem Reibradverfahren (Taber) gemäß DIN 53 745;
- Chemikalienbeständigkeit (Lagerung von Platten der entsprechenden Proben unter Vollkontakt bei 20 °C für 24 Stunden; die Platten wurden in einem Ständer in ein Becherglas gestellt und anschließend die Oberfläche visuell beurteilt).

Die Ergebnisse sind in der Tabelle 1 wiedergegeben.

**Tabelle 1: Beispiele 1 bis 4 und Vergleichsbeispiel A; Ergebnisse der Untersuchungen**

| **Beispiel** | **1** | **2** | **3** | **4** | **A** |
|---|---|---|---|---|---|
| Folie Substrat | PA PACM12/HV amorphes Polyamid | PA12/HV amorphes Polyamid | PA 1012/HV amorphes Polyamid | PA 1010/HV amorphes Polyamid | - amorphes Polyamid |
| Abrieb gravimetrisch [mg/100 U] | 10 | 8 | 9 | 9 | 15 |
| Chemikalienbeständigkeit: | | | | | |
| Methanol | +^{a)} | +^{a)} | 0^{b)} | 0^{b)} | -^{c)} |
| Ethanol | +^{a)} | +^{a)} | 0^{b)} | 0^{b)} | -^{c)} |
| Isopropanol | +^{a)} | +^{a)} | +^{a)} | +^{a)} | -^{d)} |

| | | | | | |
|---|---|---|---|---|---|
| ^{a)} keine Veränderung ^{b)} wird weicher, ansonsten keine negativen Veränderungen hinsichtlich Rissen oder Transparenz ^{c)} starke Erweichung; teilweise Auflösung ^{d)} starker Oberflächenangriff | | | | | |

Beim Versuch, die Verbunde mechanisch zu trennen, wurde in den Beispielen 1 bis 4 eine feste Haftung an den Schichtengrenzen festgestellt. In allen Fällen wurde keine Trennung, sondern stattdessen kohäsives Versagen der Folienschichten erhalten.

## Patentansprüche

1. Verwendung einer Folie, die eine Schicht aus einer Formmasse aus einem teilkristallinen Polyamid enthält, welches eine Schmelzenthalpie von mindestens 8 J/g besitzt, gemessen gemäß ISO 11357, zur Herstellung eines Verbundteils mit einem Substrat aus einer Formmasse aus einem weitgehend amorphen Polyamid, welches eine Schmelzenthalpie von weniger als 8 J/g besitzt, durch Verklebung, Verpressen, Laminieren, Hinterspritzen, Hinterschäumen oder Hinterpressen, wobei die Folie eine Dicke von 0,02 bis 1,2 mm hat.

2. Verwendung gemäß Anspruch 1,
**dadurch gekennzeichnet,**
**dass** die Folie eine substratseitige Haftvermittlerschicht enthält.

3. Verwendung gemäß Anspruch 2,
**dadurch gekennzeichnet,**
**dass** der Haftvermittler ein Blend aus einem Polyamid enthält, das mit dem teilkristallinen Polyamid der Folienschicht identisch ist oder ihm ähnlich ist, sowie einem Polyamid, das mit dem weitgehend amorphen Polyamid des Substrats identisch ist oder ihm ähnlich ist.

4. Verwendung gemäß Anspruch 2,
**dadurch gekennzeichnet,**
**dass** der Haftvermittler 2 bis 100 Gew.-% eines Copolymeren enthält, welches folgende Monomereinheiten enthält:
- 70 bis 99,9 Gew.-% an Monomereinheiten, die sich von vinylischen Verbindungen herleiten, die ausgewählt sind aus Acrylsäurederivaten, Methacrylsäurederivaten, α-Olefinen und Vinylaromaten
sowie
- 0,1 bis 30 Gew.-% an Monomereinheiten, die eine funktionelle Gruppe enthalten, die ausgewählt ist aus einer Carbonsäureanhydridgruppe, einer Epoxidgruppe und einer Oxazolingruppe.

5. Verwendung gemäß Anspruch 4,
**dadurch gekennzeichnet,**
**dass** das Copolymer folgende Monomereinheiten enthält:
a) 70 bis 99,9 Gew.-% an Monomereinheiten, die ausgewählt sind aus Einheiten folgender Formeln: 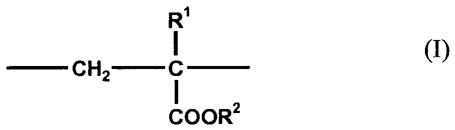 mit R¹ = H oder CH₃ und R² = H, Methyl, Ethyl, Propyl oder Butyl; 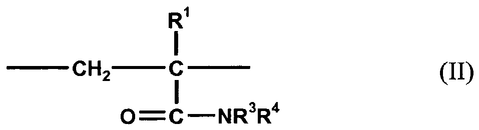 mit R¹ wie oben und R³ und R⁴, unabhängig voneinander, gleich H, Methyl oder Ethyl; 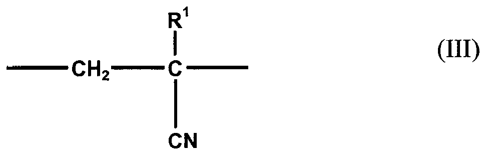 mit R¹ wie oben; 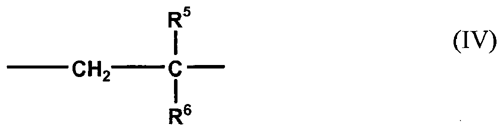 mit R⁵= H oder CH₃ und R⁶ = H oder C₆H₅; 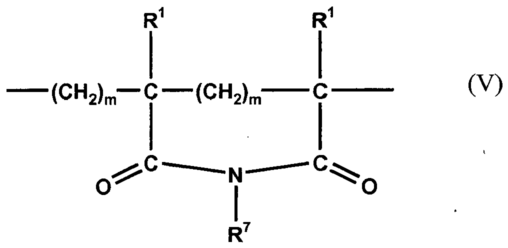 mit R¹ wie oben und R⁷= H, Methyl, Ethyl, Propyl, Butyl oder Phenyl und m = 0 oder 1;
b) 0,1 bis 30 Gew.-% an Monomereinheiten, die ausgewählt sind aus Einheiten folgender Formeln: 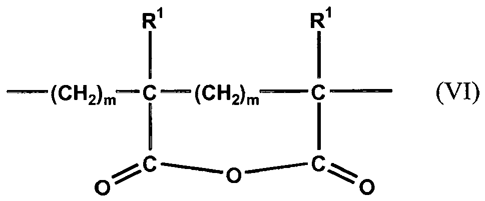 mit R¹ und m wie oben; 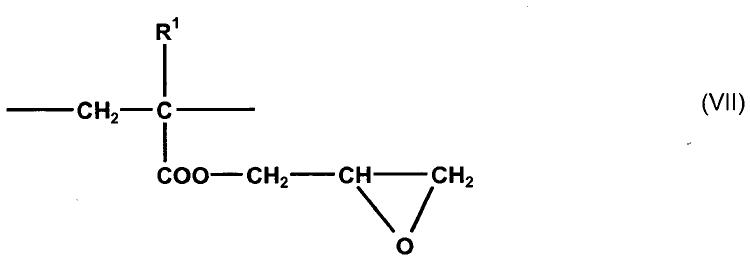 mit R¹ wie oben; 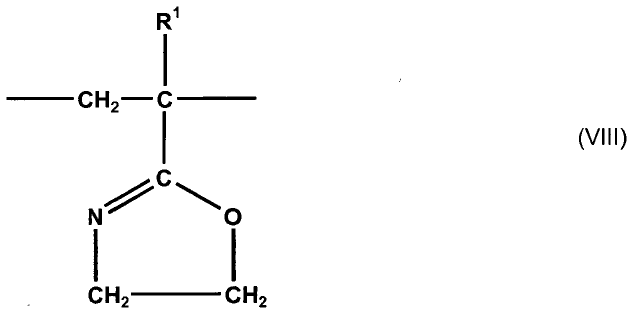 mit R¹ wie oben.

6. Verwendung gemäß einem der Ansprüche 4 und 5,
**dadurch gekennzeichnet,**
**dass** der Haftvermittler
2 bis 99,9 Gew.-% des Copolymeren und
0,1 bis 98 Gew.-% Polyamid
enthält.

7. Verwendung gemäß einem der Ansprüche 1 bis 6,
**dadurch gekennzeichnet,**
**dass** die Folie weitere Schichten enthält, die ausgewählt sind aus
- einer substratseitigen Stützschicht aus einer Polyamid-Formmasse,
- einer Farbschicht,
- einer weiteren Polyamidschicht,
- einer Schutzschicht bzw. einem Clearcoat sowie
- einer abziehbaren Schutzfolie.

8. Verbundteil, das zusammengesetzt ist aus
- einer gemäß einem der Ansprüche 1 bis 8 verwendeten Folie und
- einem Substrat aus einer Formmasse aus einem weitgehend amorphen Polyamid, welches eine Schmelzenthalpie von weniger als 8 J/g besitzt, gemessen gemäß ISO 11357, wobei das Verbundteil durch Verklebung, Verpressen, Laminieren, Hinterspritzen, Hinterschäumen oder Hinterpressen hergestellt wurde.

9. Verbundteil gemäß Anspruch 8,
**dadurch gekennzeichnet,**
**dass** das Substrat flächig ausgeformt ist.

10. Verbundteil gemäß einem der Ansprüche 8 und 9,
**dadurch gekennzeichnet,**
**dass** es ein optisches Bauteil, ein Teil eines Automobils oder Nutzfahrzeugs oder ein Medizin-, Sanitär- oder Hygieneartikel ist.

## Claims

1. The use of a foil which comprises a layer composed of a moulding composition composed of a semicrystalline polyamide whose enthalpy of fusion is at least 8 J/g, measured to ISO 11357, for production of a composite part with a substrate composed of a moulding composition composed of a substantially amorphous polyamide whose enthalpy of fusion is less than 8 J/g, via adhesive bonding, pressing, or lamination, or via reverse coating by an injection-moulding, foaming, or compression-moulding method, the foil having a thickness of from 0.02 to 1.2 mm.

2. The use according to claim 1,
**characterized in that**
the foil has an adhesion-promoter layer on the substrate side.

3. The use according to claim 2,
**characterized in that**
the adhesion promoter comprises a blend composed of a polyamide which is identical with or similar to the semicrystalline polyamide of the foil layer, and of a polyamide which is identical with or similar to the substantially amorphous polyamide of the substrate.

4. The use according to claim 2,
**characterized in that**
the adhesion promoter comprises from 2 to 100% by weight of a copolymer which contains the following monomer units:
- from 70 to 99.9% by weight of monomer units which derive from vinyl compounds selected from acrylic acid derivatives, methacrylic acid derivatives, α-olefins and vinyl aromatics, and
- from 0.1 to 30% by weight of monomer units which contain a functional group selected from a carboxylic anhydride group, an epoxide group and an oxazoline group.

5. The use according to claim 4,
**characterized in that**
the copolymer contains the following monomer units:
a) from 70 to 99.9% by weight of monomer units selected from units of the following formulae: 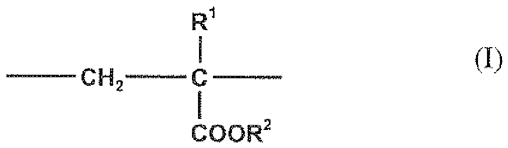 where R¹ = H or CH₃ and R² = H, methyl, ethyl, propyl or butyl; 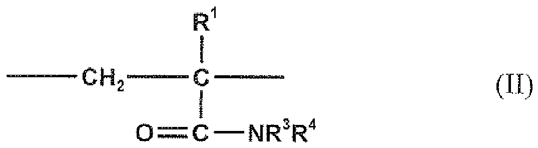 where R¹ is as above and R³ and R⁴, independently of one another, are H, methyl or ethyl; 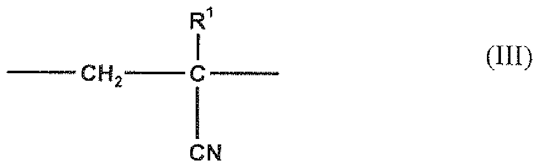 where R¹ is as above; 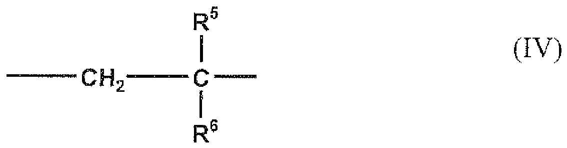 where R⁵ = H or CH₃ and R⁶ = H or C₆H₅; 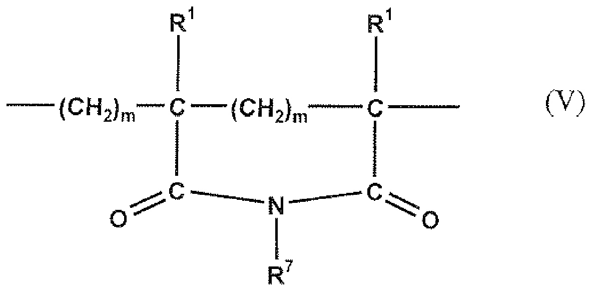 where R¹ is as above and R⁷ = H, methyl, ethyl, propyl, butyl or phenyl and m = 0 or 1;
b) from 0.1 to 30% by weight of monomer units selected from units of the following formulae: 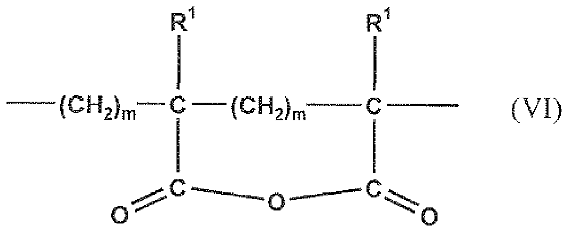 where R¹ and m are as above; 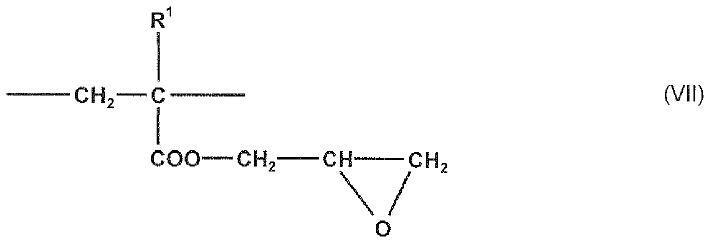 where R¹ is as above; 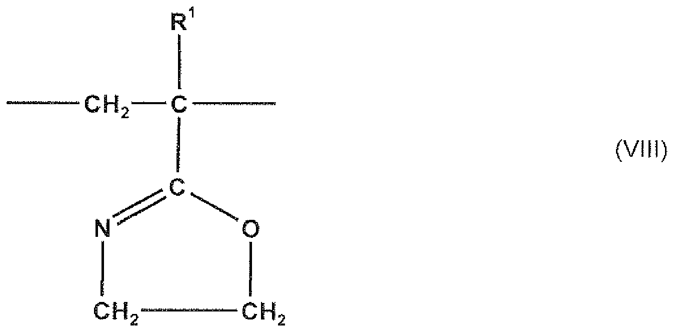 where R¹ is as above.

6. The use according to either of claims 4 and 5,
**characterized in that**
the adhesion promoter comprises from 2 to 99.9% by weight of the copolymer and from 0.1 to 98% by weight of polyamide.

7. The use according to any one of claims 1 to 6,
**characterized in that**
the foil comprises further layers selected from
- a backing layer composed of a polyamide moulding composition, on the substrate side,
- a colour layer,
- a further polyamide layer,
- a protective layer or a clearcoat, and
- a peelable protective foil.

8. A composite part composed of
- a foil used according to any one of claims 1 to 8 and
- a substrate composed of a moulding composition composed of a substantially amorphous polyamide whose enthalpy of fusion is less than 8 J/g, measured to ISO 11357, the composite part having been produced via adhesive bonding, pressing, or lamination, or via reverse coating by an injection-moulding, foaming, or compression-moulding method.

9. A composite part according to claim 8,
**characterized in that**
the substrate has been shaped in the form of a sheet.

10. A composite part according to either of claims 8 and 9,
**characterized in that**
it is an optical component, a part of an automobile or of a utility vehicle or is a medical item, sanitary item or hygiene article.

## Revendications

1. Utilisation d'un film qui contient une couche d'une matière à mouler à base d'un polyamide cristallin qui présente une enthalpie de fusion d'au moins 8 J/g, mesurée selon ISO 11357, pour la fabrication d'un élément composite comportant un support constitué d'une matière à mouler à base d'un polyamide essentiellement amorphe qui présente une enthalpie de fusion de moins de 8 J/g, par collage, pressage, stratification, rétro-projection, rétro-expansion ou rétro-pressage, le film ayant une épaisseur de 0,02 à 1,2 mm.

2. Utilisation selon la revendication 1,
**caractérisée en ce que**
le film contient une couche de promoteur d'adhérence se trouvant du côté support.

3. Utilisation selon la revendication 2,
**caractérisée en ce que**
le promoteur d'adhérence contient un mélange d'un polyamide, qui est identique au polyamide partiellement cristallin de la couche du film ou est similaire à celui-ci, ainsi que d'un polyamide qui est identique au polyamide essentiellement amorphe du support ou est similaire à celui-ci.

4. Utilisation selon la revendication 2,
**caractérisée en ce que**
le promoteur d'adhérence contient 2 à 100 % en poids d'un copolymère qui contient les motifs monomères suivants :
- 70 à 99,9 % en poids de motifs monomères qui dérivent de composés vinyliques qui sont choisis parmi des dérivés d'acide acrylique, des dérivés d'acide méthacrylique, des α-oléfines et des composés vinylaromatiques
ainsi que
- 0,1 à 30 % en poids de motifs monomères qui contiennent un groupe fonctionnel qui est choisi parmi un groupe anhydride d'acide carboxylique, un groupe époxy et un groupe oxazoline.

5. Utilisation selon la revendication 4, **caractérisée en ce que**
le copolymère contient les motifs monomères suivants :
a) 70 à 99,9 % en poids de motifs monomères qui sont choisis parmi les motifs de formules suivantes : 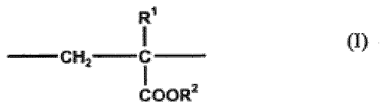 où R¹ = H ou CH₃ et R² = H, méthyle, éthyle, propyle ou butyle ; 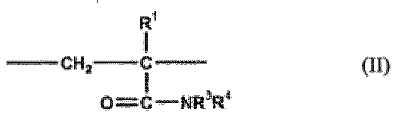 où R¹ est tel que défini ci-dessus et R³ et R⁴ représentent, indépendamment l'un de l'autre, H, le groupe méthyle ou éthyle ; 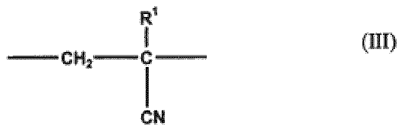 où R¹ est tel que défini ci-dessus ; 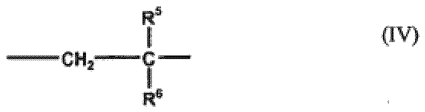 où R⁵ = H ou CH₃ et R⁶ = H ou C₆H₅ ; 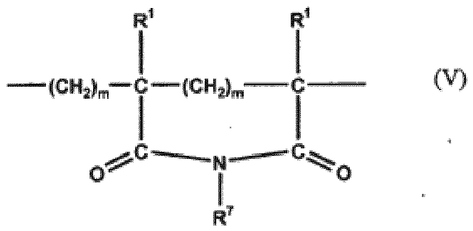 où R¹ est tel que défini ci-dessus et R⁷=H, méthyle, éthyle, propyle, butyle ou phényle et m = 0 ou 1 ;
b) 0,1 à 30 % en poids de motifs monomères qui sont choisis parmi les motifs de formules suivantes : 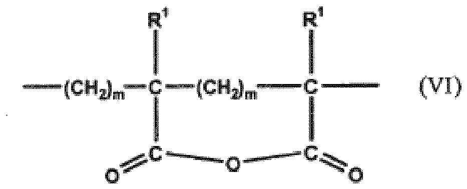 où R¹ et m sont tels que définis plus haut ; 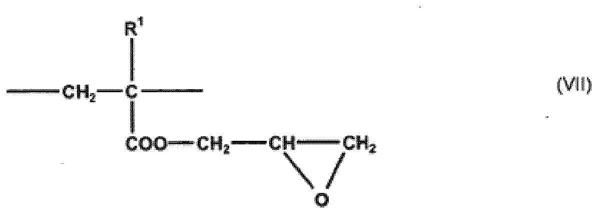 où R¹ est tel que défini plus haut ; 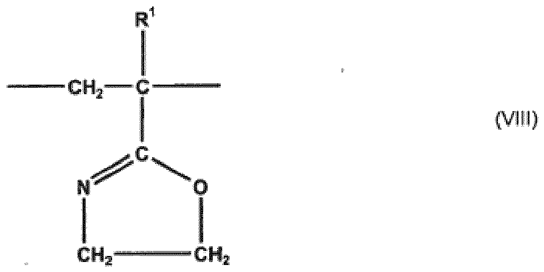 où R¹ est tel que défini plus haut.

6. Utilisation selon l'une quelconque des revendications 4 et 5,
**caractérisée en ce que**
le promoteur d'adhérence contient
2 à 99,9 % en poids du copolymère et
0,1 à 98 % en poids de polyamide.

7. Utilisation selon l'une quelconque des revendications 1 à 6,
**caractérisée en ce que**
le film contient d'autres couches, qui sont choisies parmi
- une couche protectrice se trouvant du côté support,
- une couche colorée,
- une autre couche de polyamide,
- une couche protectrice ou une couche transparente ainsi
- qu'un film protecteur détachable.

8. Élément composite, qui est composé
- d'un film utilisé selon l'une quelconque des revendications 1 à 8 et
- d'un support constitué d'une matière à mouler à base d'un polyamide essentiellement amorphe qui présente une enthalpie de fusion de moins de 8 J/g, mesurée selon ISO 11357, l'élément composite ayant été produit par collage, pressage, stratification, rétro-projection, rétro-expansion ou rétro-pressage.

9. Élément composite selon la revendication 8,
**caractérisé en ce que**
le support a une forme plane.

10. Élément composite selon l'une quelconque des revendications 8 et 9,
**caractérisé en ce**
**qu'**il s'agit d'un composant optique, d'une pièce d'une automobile ou d'un véhicule utilitaire ou d'un article médical, sanitaire ou d'hygiène.
